# NEUE EUROPÄISCHE PATENTSCHRIFT

(11) **EP 2 766 638 B2**
(45) Veröffentlichungstag und Bekanntmachung des Hinweises auf die Entscheidung über den Einspruch: **24.11.2021**
(45) Hinweis auf die Patenterteilung: 24.01.2018
(21) Anmeldenummer: 12780141.3
(22) Anmeldetag: 11.10.2012
(51) Int. Cl.: F16H 57/04, F16H 61/00, F16N 13/20, F04C 2/08, F04C 2/344, F04C 15/00, F04C 29/00, F04C 2/00, F04C 2/10, F04C 2/18

(54) **FÖRDEREINRICHTUNG ZUR FÖRDERUNG VON ÖL AUS EINEM VORRATSBEHÄLTER ZU EINEM GETRIEBE EINES KRAFTFAHRZEUGES**
PUMPING DEVICE FOR PUMPING OIL FROM A STORAGE CONTAINER TO A TRANSMISSION SYSTEM OF A MOTOR VEHICLE
DISPOSITIF DE TRANSPORT POUR LE TRANSPORT D'HUILE DEPUIS UN RÉSERVOIR VERS UNE BOÎTE DE VITESSES D'UN VÉHICULE AUTOMOBILE

(30) Priorität: 14.10.2011 DE 102011084542
(43) Veröffentlichungstag der Anmeldung: 20.08.2014
(73) Patentinhaber: Vitesco Technologies GmbH, 30165 Hannover (DE)
(72) Erfinder: BÖHM, Christian, 60316 Frankfurt am Main (DE)
(86) Internationale Anmeldenummer: PCT/EP2012/070210
(87) Internationale Veröffentlichungsnummer: WO 2013/053854

(56) Entgegenhaltungen:
- EP-B1- 1 504 192
- DE-A1- 4 012 789
- DE-A1- 10 236 454
- DE-A1- 10 300 683
- DE-A1-102004 005 430
- DE-A1-102006 030 041
- DE-B4- 10 300 683
- JP-A- H02 153 281
- US-A1- 2010 130 327
- "wälzkörperpumpen" In: Stiess W: "Pumpen-Atlas", 1966 page 129,
- MÜLLER et al.: "5.3 ,6", Dichtungstechnik, 2010, page 22,25,
- TH DARMSTADT: Schöneberger: Ölhydraulik, 1987,
- "Zeitkonstante" In: EBERTSHÄUSER et al.: "Hydraulik-trainer Band 5 , Vereinigte Fachverlage", 1995 vol. 5, page 403,
- Roloff/Matek: Machinenelemente; Vieweg-Verlag: 1976
- Krist: Hydraulik; Vogel-Buchverlag;1984
- Looman: Zahnradgetriebe; Springer-Verlag; 1996
- Förster: Automatische Fahrzeuggetriebe; Springer-Verlag; 1991
- Kirchner: Leistungsübertragung in Fahrzeuggetreiben; Springer-Verlag; 2007

## Beschreibung

Die Erfindung betrifft eine Fördereinrichtung zur Förderung von Öl aus einem Vorratsbehälter zu einem Getriebe eines Kraftfahrzeuges mit einer wahlweise von einem mechanischen Direktantrieb oder von einem zuschaltbaren Elektroantrieb antreibbaren Ölpumpe.

Solche Fördereinrichtungen werden insbesondere bei Kraftfahrzeugen mit Hybridantrieb eingesetzt. Bei solchen Hybridantrieben wird die Ölpumpe zur Versorgung eines Getriebes direkt von dem Getriebe angetrieben. Bei Stillstand des Getriebes soll dessen Funktion aufrechterhalten werden und daher die Ölpumpe in Betrieb bleiben.

Aus der DE 103 29 215 A1 ist eine Antriebsvorrichtung für eine Getriebe-Ölpumpe bekannt, bei der eine einzige Ölpumpe über ein Summiergetriebe wahlweise elektrisch oder direkt angetrieben wird. Hierfür hat das Summiergetriebe zwei Leistungsstränge, wobei ein Leistungsstrang von einem Verbrennungsmotor und der andere Leistungsstrang von einem Elektromotor antreibbar ist. Das Summiergetriebe ist beispielsweise als Planetengetriebe gestaltet. Der Vorteil dieser Gestaltung besteht darin, dass nur eine einzige Ölpumpe eingesetzt werden muss, um die Ölpumpe wahlweise elektrisch oder direkt anzutreiben. Jedoch führt das Summiergetriebe zu einem hohen baulichen Aufwand. Die DE 10 2006 030 041 A, DE 10 2004 005 430 A und EP-B-1 504 192 offenbaren Fördereinrichtungen mit zwei Antrieben.

Der Erfindung liegt das Problem zugrunde, eine Fördereinrichtung der eingangs genannten Art so weiterzubilden, dass sie besonders einfach aufgebaut und kostengünstig herstellbar ist.

Dieses Problem wird erfindungsgemäß durch eine Fördereinrichtung nach Anspruch 1 gelöst. Die abhängigen Ansprüche beziehen sich auf besondere Ausführungsarten der Erfindung nach Anspruch 1. Durch diese Gestaltung werden die verschiedenen Möglichkeiten des Antriebs der Ölpumpe durch die entsprechende Gestaltung der Ölpumpe selbst gelöst. Daher wird die Vorschaltung eines Summiergetriebes vor der Ölpumpe vermieden. Die erfindungsgemäße Fördereinrichtung ist daher besonders einfach aufgebaut und kostengünstig herstellbar. Weiterhin ist auch ein Parallelbetrieb des Direktantriebs und des Elektroantriebs denkbar, wenn beispielsweise der Elektroantrieb frühzeitig gestartet werden soll, bevor der Direktantrieb abgeschaltet wird. Ebenso kann die Förderleistung der Ölpumpe durch Zuschaltung des Elektroantriebs angehoben werden, wenn der Direktantrieb bei einem Betriebszustand mit zu geringer Drehzahl läuft.

Die relativ zueinander beweglichen Bauteile könnten beispielsweise zwei unabhängig voneinander antreibbare Laufräder sein, die sandwichartig übereinander liegen. Dies führt jedoch durch hohe Abmessungen zu einem unnötigen baulichen Aufwand. Der bauliche Aufwand zur Bildung der relativ zueinander beweglichen Bauteile lässt sich gemäß der Erfindung einfach gering halten, wenn die Ölpumpe ein gegenüber einem drehbaren Rotor drehbar gelagertes Läuferteil mit Ölzufuhrelementen für den Rotor hat. Durch diese Gestaltung lassen sich der Rotor der Ölpumpe mit dem Direktantrieb und das Läuferteil der Ölpumpe mit dem zuschaltbaren Elektroantrieb koppeln. Die entgegengesetzte Koppelung ist ebenfalls möglich.

Die Ölpumpe gestaltet sich gemäß der Erfindung konstruktiv einfach, weil das Läuferteil gegenüber einem feststehenden Gehäuse drehbar gelagert und mittels einer Radialdichtung abgedichtet ist, und wenn Einlass- und Auslassanschlüsse zum hydraulischen Anschluss der Ölpumpe an dem Gehäuse angeordnet sind.

Die erfindungsgemäße Fördereinrichtung gestaltet sich kompakt, weil das Gehäuse eine gemeinsame Ausnehmung für einen Elektromotor des Elektroantriebs und das Läuferteil und den Rotor der Ölpumpe hat. Weiterhin wird hierdurch der Elektromotor von dem geförderten Öl gekühlt und dessen Geräusche gedämpft. Weiterhin kann hierdurch die Abdichtung einer Wellendurchführung für den Elektroantrieb entfallen.

Ein vorgesehenes Antriebsmoment beim Betrieb der Ölpumpe durch den Elektroantrieb lässt sich gemäß einer anderen vorteilhaften Weiterbildung der Erfindung einfach einstellen, wenn der Elektroantrieb ein Untersetzungsgetriebe hat.

Das Läuferteil könnte beispielsweise einen umlaufenden Zahnkranz aufweisen, an dem der jeweilige Antrieb angelenkt ist. Dies führt jedoch zu großen Abmessungen und damit zu einem erhöhten baulichen Aufwand der Ölpumpe. Die Ölpumpe gestaltet sich gemäß der Erfindung besonders kompakt, wenn der Rotor auf einer Welle befestigt ist und das Läuferteil mit einer konzentrisch zu der Welle angeordneten Hohlwelle verbunden ist. Selbstverständlich kann in einer nicht unter den Wortlaut des Anspruchs 1 fallenden Ausführungsart, in kinematischer Umkehr auch der Rotor auf der Hohlwelle und das Läuferteil auf der Welle angeordnet sein. Vorzugsweise ist die Hohlwelle ausschließlich innerhalb des Gehäuses geführt, so dass die Abdichtung einer Wellendurchführung vermieden wird.

Die Ölpumpe besteht gemäß einer anderen vorteilhaften Weiterbildung der Erfindung aus besonders wenigen zu montierenden Bauteilen, wenn das Läuferteil als innerhalb des Gehäuses angeordnetes Innengehäuse mit einem den Rotor radial umschließenden Ring und den Stirnseiten des Rotors gegenüberstehenden Steuerplatten ausgebildet ist. Vorzugsweise weisen der Ring oder die Steuerplatten die Ölzufuhrelemente für den Rotor auf.

Zur Vereinfachung des baulichen Aufwandes der Ölpumpe trägt es gemäß einer anderen vorteilhaften Weiterbildung der Erfindung bei, wenn Einlass- und Auslassöffnungen an dem Läuferteil angeordnet sind. Damit dienen die Einlass- und Auslassöffnungen als Ölzufuhrelemente für den Rotor.

Eine axiale Anströmung oder Durchströmung der Ölpumpe lässt sieh gemäß einer anderen vorteilhaften Weiterbildung der Erfindung einfach erreichen, wenn zumindest eine der Einlass- und Auslassöffnungen an den Steuerplatten des Läuferteils angeordnet ist.

Eine radiale Abströmung der Ölpumpe lässt sich gemäß einer anderen vorteilhaften Weiterbildung der Erfindung erreichen, wenn zumindest eine der Einlass- und Auslassöffnungen an dem den Rotor umschließenden Ring des Läuferteils angeordnet ist.

Eine gegenseitige Beeinflussung der Antriebe untereinander lässt sich gemäß einer anderen vorteilhaften Weiterbildung der Erfindung einfach vermeiden, wenn der Direktantrieb und der Elektroantrieb selbsthemmend gestaltet sind.

Die Ölpumpe lässt sich gemäß einer anderen vorteilhaften Weiterbildung der Erfindung besonders vorteilhaft von zwei unterschiedlichen Antrieben antreiben, wenn die Ölpumpe als Zahnringpumpe, als Flügelzellenpumpe oder als Außenzahnradpumpe ausgebildet ist Bei solchen Pumpprinzipien wirken der entsprechend gestaltete Rotor und ein den Rotor umgebender Ring derartzusammen, dass auf besonders einfache Art wahlweise der Ring oder der Rotor zur Förderung des Öls angetrieben werden kann.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in:
- Fig. 1: schematisch eine erfindungsgemäße Fördereinrichtung mit angrenzenden Bauteilen eines Kraftfahrzeugs,
- Fig. 2: eine erste Ausführungsform der Fördereinrichtung mit zwei Antrieben aus Figur 1,
- Fig. 3: eine Schnittdarstellung durch die Ölpumpe aus Figur 2 entlang der Linie III - III,
- Fig. 4: eine Schnittdarstellung durch eine weitere Ausführungsform der Ölpumpe,
- Fig. 5: eine weitere Ausführungsform der Ölpumpe in einer Schnittdarstellung.

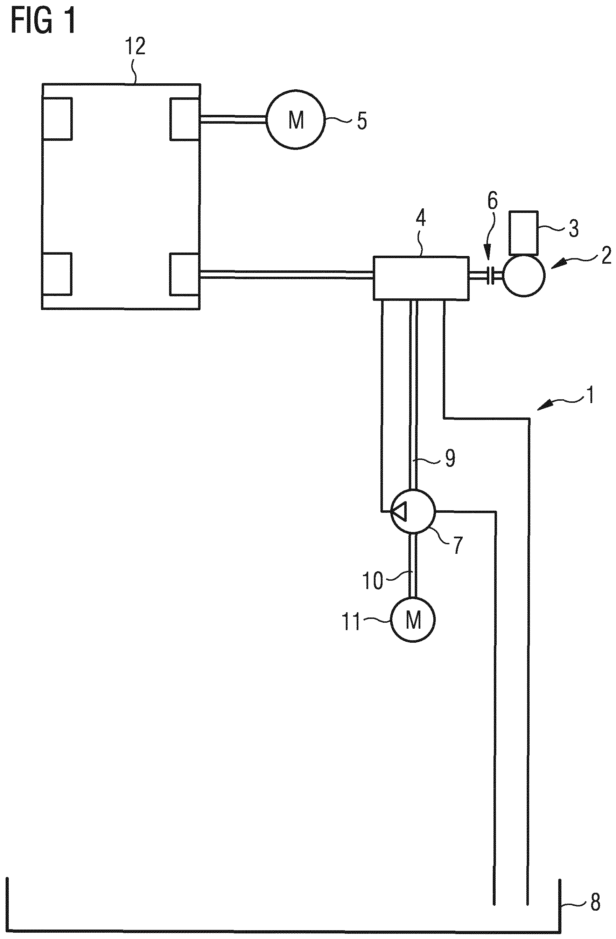

Figur 1 zeigt schematisch eine Fördereinrichtung 1 mit Bauteilen eines Hybridantriebs 2 eines schematisch dargestellten Kraftfahrzeuges 12. Der Hybridantrieb 2 hat eine Brennkraftmaschine 3, welche das Kraftfahrzeug 12 über ein Getriebe 4 antreibt, und eine elektrische Antriebseinheit 5 zum Antrieb des Kraftfahrzeuges 12 unabhängig von dem Getriebe. Eine Kupplung trennt die Brennkraftmaschine 3 von dem Getriebe 4. Die Fördereinrichtung 1 hat eine Ölpumpe 7 zur Versorgung des Getriebes 4 mit Öl und einen als Ölwanne ausgebildeten Vorratsbehälter 8. Von der Ölpumpe 7 gefördertes Öl gelangt zu dem Getriebe 4 und von dort wieder zurück in den Vorratsbehälter 8.

Das Getriebe 4 hat einen Direktantrieb 9 zum Antrieb der Ölpumpe 7. Weiterhin ist ein Elektroantrieb 10 mit einem Elektromotor 11 mit der Ölpumpe 7 verbunden. Die Ölpumpe 7 lässt sich damit wahlweise über den Elektroantrieb 10 oder über den Direktantrieb 9 antreiben. Auch ein Parallelbetrieb des Direktantriebes 9 und des Elektroantriebes 10 ist denkbar, um beispielsweise den Elektroantrieb 10 frühzeitig vor dem Abschalten des Direktantriebes 9 hochzufahren. In einem Betriebsmodus des Kraftfahrzeuges 12 wird die elektrische Antriebseinheit 5 zugeschaltet und die Brennkraftmaschine 3 abgeschaltet. In diesem Fall ist auch der Direktantrieb 9 des Getriebes 4 abgeschaltet. Die Ölpumpe 7 wird in diesem Betriebsmodus des Kraftfahrzeuges 12 über den Elektroantrieb 10 angetrieben.

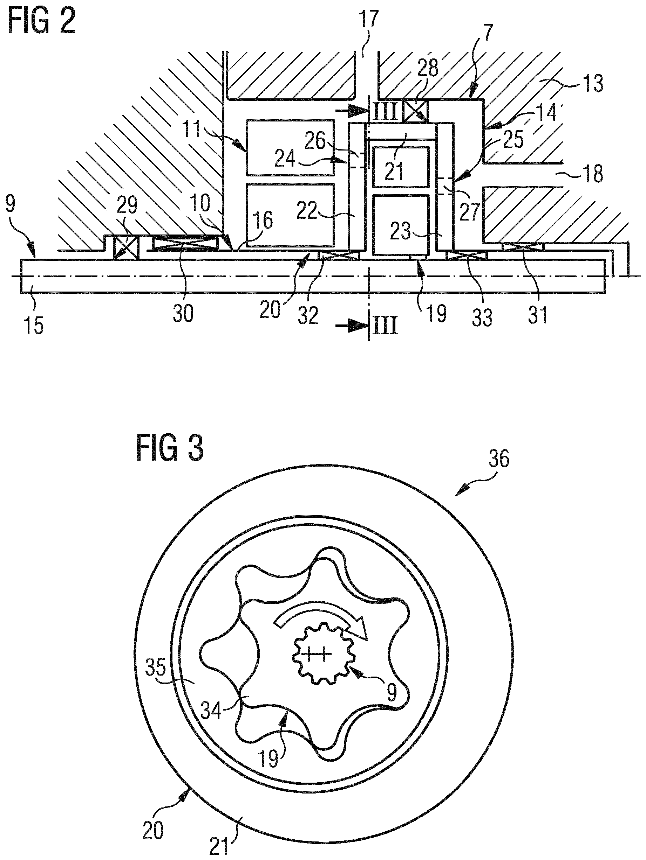

Figur 2 zeigt eine Schnittdarstellung durch die Fördereinrichtung 1 mit einem Teilbereich der Ölpumpe 7, dem Elektroantrieb 10 und dem Direktantrieb 9 aus Figur 1. Hierbei ist zu erkennen, dass die Ölpumpe 7 ein feststehendes Gehäuse 13 mit einer Ausnehmung 14 zur Aufnahme beweglicher Bauteile der Ölpumpe 7 und des Elektromotors 11 mit dem Elektroantrieb 10 hat. Der Direktantrieb 9 hat eine in die Ausnehmung 14 eingeführte Welle 15. Der Elektroantrieb 10 hat eine vollständig innerhalb der Ausnehmung 14 des Gehäuses 13 angeordnete, die Welle 15 konzentrisch umschließende Hohlwelle 16. Das Gehäuse 13 hat zudem einen Einlassanschluss 17 und einen Auslassanschluss 18 der Ölpumpe 7. Auf der Welle 15 ist ein Rotor 19 der Ölpumpe 7 befestigt. Auf der Hohlwelle 16 ist ein gegenüber dem Rotor 19 drehbares Läuferteil 20 befestigt. Das Läuferteil 20 hat einen den Rotor 19 radial umschließenden Ring 21 und den Stirnseiten des Rotors 19 gegenüberstehende Steuerplatten 22, 23, sowie Ölzufuhrelemente 24, 25 für den Rotor 19. Die Ölzufuhrelemente 24, 25 sind als Einlassöffnung 26 und als Auslassöffnung 27 ausgebildet. Die Einlassöffnung 26 und die Auslassöffnung 27 sind beispielhaft in den Steuerplatten 22, 23 angeordnet. Alternativ dazu können die Einlassöffnung 26 und die Auslassöffnung 27 bei entsprechend gestalteter Ölpumpe 7 in dem Ring 21 angeordnet sein oder sich auf Ring 21 und Steuerplatten 22, 23 aufteilen. Radialdichtungen 28, 29 dichten die Welle 15 und das Läuferteil 20 gegenüber dem Gehäuse 13 ab. Mehrere Lagerungen 30 - 33 ermöglichen die drehbare Lagerung der Hohlwelle 16 gegenüber dem Gehäuse 13 und gegenüber der Welle 15. Der Direktantrieb 9 und der Elektroantrieb 10 sind selbsthemmend gestaltet, so dass das Läuferteil 20 feststeht, wenn der Elektroantrieb 10 abgeschaltet ist und der Rotor 19 feststeht, wenn der Direktantrieb 9 abgeschaltet ist.

Dreht man die Welle 15 des Direktantriebs 9, wird der Rotor 19 gegenüber dem Läuferteil 20 verdreht. Dabei wird Öl über den Einlassanschluss 17 und die Einlassöffnung 26 angesaugt und über die Auslassöffnung 27 zu dem Auslassanschluss 18 gefördert. Dreht man die Hohlwelle 16 über den Elektroantrieb 10, wird ausschließlich das Läuferteil 20 mit den Ölzufuhrelementen 24, 25 gegenüber dem Rotor 19 verdreht. Damit wird ebenfalls Öl über den Einlassanschluss 17 angesaugt und zu dem Auslassanschluss 18 im Gehäuse 13 gefördert.

Figur 3 zeigt in einer Schnittdarstellung entlang der Linie III - III aus Figur 2, dass die Ölpumpe 7 als Zahnringpumpe 36 ausgebildet ist. Ein von dem Direktantrieb 9 antreibbarer Innenläufer 34 bildet den Rotor 19, auf dem sich ein Außenläufer 35 abrollt. Der Außenläufer 35 ist konzentrisch in dem von dem in Figur 2 dargestellten Elektroantrieb 10 antreibbaren Ring 21 angeordnet. Wird der Ring 21 über den Elektroantrieb 10 verdreht, rollt sich ebenfalls der Außenläufer 35 auf dem Innenläufer 34 ab. In beiden Fällen wird über die in den in Figur 2 dargestellte Einlassöffnung 26 in einer der Steuerplatten 22 Öl angesaugt und zu der Auslassöffnung 27 in der anderen Steuerplatte 23 gefördert.

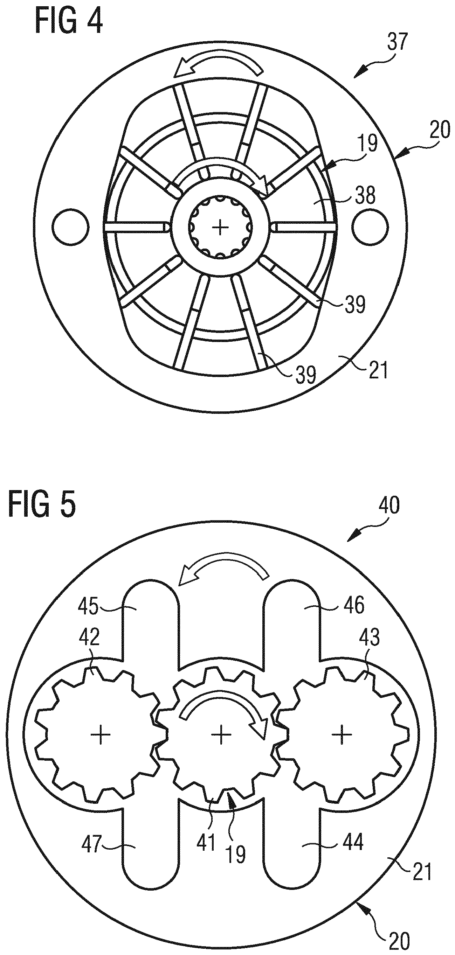

Figur 4 zeigt eine weitere Ausführungsform der Ölpumpe 7, welche sich von der aus Figur 2 vor allem dadurch unterscheidet, dass die Ölpumpe 7 als Flügelzellenpumpe 37 ausgebildet ist. Der Rotor 19 weist hier eine drehbare Scheibe 38 mit einzelnen Flügeln 39 auf, welche in dem unrund gestalteten Ring 21 des Läuferteils 20 entlang gleiten. Wie bei den vorangegangenen Ausführungsformen ist der Ring 21 mit dem Elektroantrieb 10 und der Rotor 19 mit dem Direktantrieb 9 verbunden.

Figur 5 zeigt eine weitere Ausführungsform der Ölpumpe 7, welche sich von der aus Figur 2 vor allem dadurch unterscheidet, dass die Ölpumpe 7 als Außenzahnradpumpe 40 ausgebildet ist. Der Rotor 19 hat ein zentrisches Zahnrad 41 und treibt auf dem Ring 21 des Läuferteils 20 gelagerte Zahnräder 42, 43 an. Bei einer vorgesehenen Drehrichtung des Zahnrades 41 des Rotors 19 relativ zu dem Ring 21 im Uhrzeigersinn führen zwei erste Kanäle 44, 45 zu der in Figur 2 dargestellten Einlassöffnung 26 und zwei zweite Kanäle 46, 47 zu der Auslassöffnung 27.

Die Verbindung der Fördereinrichtung 1 mit dem Hybridantrieb 2 ist nur beispielhaft zu verstehen. Die Fördereinrichtung 1 eignet sich ebenfalls für Kraftfahrzeuge 12, welche ausschließlich über die Brennkraftmaschine 3 angetrieben sind.

## Patentansprüche

1. Fördereinrichtung (1) zur Förderung von Öl aus einem Vorratsbehälter (8) zu einem Getriebe (4) eines Kraftfahrzeuges (12) mit einer wahlweise von einem mechanischen Direktantrieb (9) oder von einem zuschaltbaren Elektroantrieb (10) antreibbaren Ölpumpe (7), wobei die Ölpumpe (7) zwei relativ zueinander bewegliche Bauteile zur Förderung des Öls hat und der mechanische Direktantrieb (9) mit einem der relativ zueinander beweglichen Bauteile und der zuschaltbare Elektroantrieb (10) mit dem anderen der relativ zueinander beweglichen Bauteile verbunden ist, wobei die Ölpumpe (7) ein gegenüber einem drehbaren Rotor (19) drehbar gelagertes Läuferteil (20) mit Ölzufuhrelementen (24, 25, 57, 58) für den Rotor (19) hat und wobei der Rotor (19) auf einer Welle (15, 54) befestigt ist und das Läuferteil (20) mit einer konzentrisch zu der Welle (15, 54) angeordneten Hohlwelle (16, 53) verbunden ist, wobei das Läuferteil (20) gegenüber einem feststehenden Gehäuse (13, 52) drehbar gelagert und mittels einer Radialdichtung (28) abgedichtet ist und wobei Einlass- und Auslassanschlüsse (17, 18, 60, 61) zum hydraulischen Anschluss der Ölpumpe (7) an dem Gehäuse (13, 52) angeordnet sind, wobei das Gehäuse (13) eine gemeinsame Ausnehmung (14) für einen Elektromotor (11) des Elektroantriebs (10) und das Läuferteil (20) und den Rotor (19) der Ölpumpe (7) hat.

2. Fördereinrichtung nach Anspruch 1, **dadurch gekennzeichnet, dass** der Elektroantrieb (10) ein Untersetzungsgetriebe (59) hat.

3. Fördereinrichtung nach Anspruch 1 oder 2, **dadurch gekennzeichnet, dass** das Läuferteil (20) als innerhalb des Gehäuses (13, 52) angeordnetes Innengehäuse mit einem den Rotor (19) radial umschließenden Ring (21) und den Stirnseiten des Rotors (19) gegenüberstehenden Steuerplatten (22, 23) ausgebildet ist.

4. Fördereinrichtung nach einem der Ansprüche 1 bis 3, **dadurch gekennzeichnet, dass** Einlass- und Auslassöffnungen (26, 27, 55, 56) an dem Läuferteil (20) angeordnet sind.

5. Fördereinrichtung nach Anspruch 3 und 4, **dadurch gekennzeichnet, dass** zumindest eine der Einlass- und Auslassöffnungen (26, 27, 55, 56) an den Steuerplatten (22, 23) des Läuferteils (20) angeordnet ist.

6. Fördereinrichtung nach Anspruch 4, **dadurch gekennzeichnet, dass** zumindest eine der Einlass- und Auslassöffnungen (26, 27, 55, 56) an dem den Rotor (19) umschließenden Ring (21) des Läuferteils (20) angeordnet ist.

7. Fördereinrichtung nach einem der Ansprüche 1 bis 6, **dadurch gekennzeichnet, dass** der Direktantrieb (9) und der Elektroantrieb (10) selbsthemmend gestaltet sind.

8. Fördereinrichtung nach einem der Ansprüche 1 bis 7, **dadurch gekennzeichnet, dass** die Ölpumpe (7) als Zahnringpumpe (36), als Flügelzellenpumpe (37) oder als Außenzahnradpumpe (40) ausgebildet ist.

## Claims

1. Pumping device (1) for pumping oil from a storage container (8) to a transmission (4) of a motor vehicle (12) having an oil pump (7) which can be driven optionally by a mechanical direct drive (9) or by a switchable electric drive (10), wherein the oil pump (7) has two components which can be moved relative to one another in order to pump the oil, and the mechanical direct drive (9) is connected to one of the components which can be moved relative to one another and the switchable electric drive (10) is connected to the other of the components which can be moved relative to one another, wherein the oil pump (7) has a rotor part (20) which is mounted rotatably with respect to a rotatable rotor (19), with oil feed elements (24, 25, 57, 58) for the rotor (19), and wherein the rotor (19) is fastened on a shaft (15, 54) and the rotor part (20) is connected to a hollow shaft (16, 53) which is arranged concentrically with respect to the shaft (15, 54), wherein the rotor part (20) is mounted rotatably with respect to a stationary housing (13, 52) and is sealed by means of a radial seal (28), and wherein inlet and outlet connectors (17, 18, 60, 61) for the hydraulic connection of the oil pump (7) are arranged on the housing (13, 52), wherein the housing (13) has a common recess (14) for an electric motor (11) of the electric drive (10) and the rotor part (20) and the rotor (19) of the oil pump (7).

2. Pumping device according to Claim 1, **characterized in that** the electric drive (10) has a step-down gear mechanism (59).

3. Pumping device according to Claim 1 or 2, **characterized in that** the rotor part (20) is configured as an inner housing which is arranged inside the housing (13, 52) with a ring (21) which encloses the rotor (19) radially and control plates (22, 23) which lie opposite the end sides of the rotor (19).

4. Pumping device according to one of Claims 1 to 3, **characterized in that** inlet and outlet openings (26, 27, 55, 56) are arranged on the rotor part (20).

5. Pumping device according to Claims 3 and 4, **characterized in that** at least one of the inlet and outlet openings (26, 27, 55, 56) is arranged on the control plates (22, 23) of the rotor part (20).

6. Pumping device according to Claim 4, **characterized in that** at least one of the inlet and outlet openings (26, 27, 55, 56) is arranged on the ring (21) of the rotor part (20), which ring (21) encloses the rotor (19).

7. Pumping device according to one of Claims 1 to 6, **characterized in that** the direct drive (9) and the electric drive (10) are of self-locking design.

8. Pumping device according to one of Claims 1 to 7, **characterized in that** the oil pump (7) is configured as an annular gear pump (36), as a vane cell pump (37) or as an external gear pump (40).

## Revendications

1. Dispositif de refoulement (1) pour refouler de l'huile provenant d'un réservoir (8) vers une transmission (4) d'un véhicule automobile (12) comprenant une pompe à huile (7) pouvant être entraînée de manière sélective par un entraînement direct mécanique (9) ou par un entraînement électrique commutable (10), la pompe à huile (7) présentant deux composants déplaçables l'un par rapport à l'autre pour refouler l'huile et l'entraînement direct mécanique (9) étant connecté à l'un des composants déplaçables l'un par rapport à l'autre et l'entraînement électrique commutable (10) étant connecté à l'autre des composants déplaçables l'un par rapport à l'autre, la pompe à huile (7) présentant une partie d'induit (20) supportée à rotation par rapport à un rotor rotatif (19), avec des éléments d'alimentation en huile (24, 25, 57, 58) pour le rotor (19) et le rotor (19) étant fixé sur un arbre (15, 54) et la partie d'induit (20) étant connectée à un arbre creux (16, 53) disposé concentriquement par rapport à l'arbre (15, 54), la partie d'induit (20) étant supportée de manière rotative par rapport à un boîtier fixe (13, 52) et étant étanchéifiée au moyen d'un joint radial (28) et des raccords d'entrée et de sortie (17, 18, 60, 61) étant disposés sur le boîtier (13, 52) pour le raccordement hydraulique de la pompe à huile (7), le boîtier (13) présentant un évidement commun (14) pour un moteur électrique (11) de l'entraînement électrique (10) et la partie d'induit (20) et le rotor (19) de la pompe à huile (7).

2. Dispositif de refoulement selon la revendication 1, **caractérisé en ce que** l'entraînement électrique (10) présente un démultiplicateur (59).

3. Dispositif de refoulement selon la revendication 1 ou 2, **caractérisé en ce que** la partie d'induit (20) est réalisée sous forme de boîtier intérieur disposé à l'intérieur du boîtier (13, 52) avec une bague (21) entourant radialement le rotor (19) et des plaques de commande (22, 23) opposées aux côtés frontaux du rotor (19).

4. Dispositif de refoulement selon l'une quelconque des revendications 1 à 3, **caractérisé en ce que** des ouvertures d'entrée et de sortie (26, 27, 55, 56) sont disposées au niveau de la partie d'induit (20).

5. Dispositif de refoulement selon les revendications 3 et 4, **caractérisé en ce qu'**au moins l'une des ouvertures d'entrée et de sortie (26, 27, 55, 56) est disposée au niveau des plaques de commande (22, 23) de la partie d'induit (20).

6. Dispositif de refoulement selon la revendication 4, **caractérisé en ce qu'**au moins l'une des ouvertures d'entrée et de sortie (26, 27, 55, 56) est disposée au niveau de la bague (21) de la partie d'induit (20) entourant le rotor (19).

7. Dispositif de refoulement selon l'une quelconque des revendications 1 à 6, **caractérisé en ce que** l'entraînement direct (9) et l'entraînement électrique (10) sont configurés de manière auto-bloquante.

8. Dispositif de refoulement selon l'une quelconque des revendications 1 à 7, **caractérisé en ce que** la pompe à huile (7) est réalisée sous forme de pompe à engrenages (36), sous forme de pompe à ailettes (37) ou sous forme de pompe à denture externe (40).
